# EUROPEAN PATENT SPECIFICATION

(11) **EP 1 263 848 B1**
(45) Date of publication and mention of the grant of the patent: **07.04.2004**
(21) Application number: 01909240.2
(22) Date of filing: 14.02.2001
(51) Int. Cl.: C08J 3/22, C08K 5/33, C08L 21/00

(54) **A COMPOUNDING PROCESS FOR ACHIEVING UNIFORM DISPERSION OF CURING AGENTS AND A SEALANT PRODUCED THEREBY**
MISCHUNGSVERFAHREN ZUR HERSTELLUNG EINER EINHEITLICHEN DISPERSION VON HÄRTUNGSMITTELN UND DAMIT PRODUZIERTES DICHTUNGSMATERIAL
PROCEDE DE MELANGEAGE PERMETTANT DE REALISER LA DISPERSION UNIFORME D'AGENTS DE VULCANISATION ET COMPOSITION ETANCHE AINSI OBTENUE

(30) Priority: 18.02.2000 US 507381
(43) Date of publication of application: 11.12.2002
(73) Proprietor: Bridgestone Corporation, Tokyo 104 (JP)
(72) Inventor: HOGAN, Terrence, Akron, Ohio 44319 (US); HERGENROTHER, William, Akron, OH 44313 (US); DOMER, Christine, North Canton, OH 44721 (US)
(74) Representative: Albrecht, Thomas, Dr.
(86) International application number: PCT/US2001/004809
(87) International publication number: WO 2001/060894

(56) References cited:
- WO-A-00/59988
- US-A- 3 859 258
- US-A- 4 367 097
- US-A- 4 616 048
- US-A- 5 295 525

## Description

### BACKGROUND OF THE INVENTION

The present invention relates to compounding of quinoid curing agents, dry rubber blends including the curing agent, and sealants useful for various applications including sealants for tubeless pneumatic rubber tires to minimize loss of air due to punctures resulting from road debris such as nails.

A frequently used curative for pneumatic tire sealant compositions involves a quinoid and an activator. The activator, often described as a co-curing agent or "B component", is used to achieve crosslinking in association with the dormant quinoid uniformly distributed as a curing agent into the elastomer or rubber (such blend being called an "A component"). The terms "elastomer" and "rubber" are used interchangeably hereinthroughout.

Traditionally, the quinoid rubber curing agent is solution compounded into the elastomer to form the A component. This solution compounding usually achieves a uniform distribution of the curing agent in the elastomer. The quinoid curing agent is initially solubilized in an organic, polar solvent and then mixed with a rubber masterbatch (which can include, e.g., a high molecular weight elastomer, a low molecular weight tackifier, a reinforcing agent, and a solvent). The various solvents are removed to yield a uniform fine distribution of curing agent in elastomer ("A component"). This dry blend later can be used to crosslink the elastomer once the curing agent and the co-curing agent come together.

While many solvent processes in rubber compounding are acceptable for current manufacturing techniques, the use of organic, polar solvents in rubber compounding presents issues of solvent acquisition and storage costs before manufacture, solvent removal costs during manufacture, solvent capture costs as a byproduct of manufacture, and other manufacturing costs involved with the use of solvents. Moreover, many rubber vulcanization processes begin with Banbury-type mixing techniques, i.e., a dry, solid mixing process. Thus, the presence of solvents to intimately mix various ingredients is temporary.

### SUMMARY OF THE INVENTION

The present invention solves a problem of solvent-blended processing of quinoid curing systems by minimizing the use of solvents for such curing systems. A generally solvent free A component is provided before being mixing with a co-curing agent (B component).

One aspect of the invention is a method of dispersing quinoid curing agents into an elastomer. Advantageously, the method preferably does not require either the use of polar organic solvents to solubilize the quinoid before introduction into a rubber masterbatch or the use nonpolar organic solvents to dissolve the elastomer or other components of the rubber masterbatch. Eliminating or minimizing these solvents from the production process eliminates the costly step of removing the solvents from the final product and produces a product having more consistent cure times.

Another aspect of the present invention is a generally solvent free rubber masterbatch for sealant compositions and solvent-free elastomeric sealant compositions made therefrom.

In another aspect, the present invention provides a solventless process to make elastomeric sealant compositions involving the use of a quinoid curing agent.

In the process, an elastomer is provided, optionally and preferably, in the substantial absence of an organic solvent. A quinoid curing agent is separately dispersed in a polymer having a number average molecular weight (Mₙ) below about 5,000 to form a curing agent concentrate. The curing agent concentrate is combined with the elastomer to form the sealant composition. Alternatively, the curing agent may be added, in the absence of an organic solvent, to the elastomer without first dispersing it in a polymer.

Preferably, the elastomer includes at least one polymer having a Mₙ above about 50,000 and at least one polymer having a Mₙ below about 5,000. Typically, the curing agent has a particle size less than about 5 µm and comprises from about 0.2 to about 2.0 parts by weight per hundred parts of elastomer/rubber (phr) of the sealant composition.

As stated above, in the present process, the curing agent concentrate and the elastomer constituent are advantageously substantially free of organic solvent. Moreover, each includes less than about 10.0% (by wt.) of organic solvent.

Compounding the sealant composition in a generally solvent-free environment minimizes the introduction and removal of solvent in the intermediate steps of a sealant composition manufacturing process. Costs associated with including solvents in compounding and then removing the same before sealant composition curing thus are reduced. Advantageously, the properties of the sealant composition resulting from this process are improved.

### DETAILED DESCRIPTION OF PREFERRED EMBODIMENTS

Quinoid curing agents can be dispersed readily and uniformly in rubber compositions, especially the rubber mixtures referred to herein as the A component. The present method achieves a uniform dispersion of small quinoid particles without the use of polar, organic solvents to solubilize the curing agent. This advantage can be further leveraged by avoiding the use of a non-polar organic solvent, previously used to reduce the viscosity of the rubber component.

When the A and B components (with the latter often being a peroxide co-curing agent) are combined, the result is a composition that readily cures at temperatures from about 15° to about 150°C and maintain its crosslink density even when exposed to air and/or elevated temperatures.

The sealant composition of the present invention generally contains at least one high molecular weight elastomer(s) as well as at least one elastomeric-type tackifier, all present in the rubber masterbatch.

High molecular weight elastomer(s) that can be utilized in the present invention include ethylene-propylene-diene terpolymers (EPDM), polybutadiene (PBD), partially hydrogenated polybutadiene, butyl rubber, halobutyl rubber (with the halogen being, for example, Cl or Br), acrylonitrile-butadiene copolymer, styrene/butadiene copolymer, natural rubber, cis polyisoprene, and the like. Mixtures of two or more of the above elastomers can also be used, as can various other conventional high molecular weight rubbers. The Mₙ of the high molecular weight elastomer is preferably at least about 50,000 and desirably at least about 100,000.

The elastomeric-type tackifiers utilized in the present invention are rubbery polymers of relatively low molecular weight. Generally, from about 55 to about 90% (by wt.) of the sealant rubber compound of the present invention is the tackifier with from about 65 or 75% to about 90% being preferred. The amount of the high molecular weight rubber compounds accordingly is from about 10 to about 45% (by wt.), with from about 10 to about 25 or 35% (by wt.) being preferred. The stated weights are based on the total weight of the high and low molecular weight rubbers, although other components of the specified present invention system may given in phr.

The high molecular weight elastomer(s) and the low molecular weight polymers do not need to be solubilized in a nonpolar solvent before the quinoid curing agent is added. Accordingly, the invention is directed to situations where less than 10%, more preferably less than 1%, and most preferably less than 0.1% (by wt.) non-polar solvent is present in the rubber blend when the quinoid curing agent is added. While the term non-polar organic solvent is a commonly used and well understood term, for the purposes of this application it may include C₄-C₃₀ linear, branched and cyclic alkanes or alkenes, C₆-C₂₀ aromatics including naphthenic compounds, and other non-polar hydrocarbon compounds of similar solubility parameters to the specified compounds.

Quinoid curing agents generally include any suitable quinone-dioxime compound. Quinoid curing agent is generally utilized in an amount of from about 0.1 to about 5.0 parts by weight (pbw), preferably from about 0.2 to about 2.0 pbw, most preferred from about 0.3 to about 1.0 pbw, per 100 pbw of the A component (i.e., the dry sealant component).

Suitable quinoid compounds include one or more of p-quinonedioxime, p-quinone dioxime diacetate, p-quinone dioxime dicaproate, p-quinone dioxime dilaurate, p-quinone dioxime distearate, p-quinone dioxime dicrotonate, p-quinone dioxime dinaphthenate, p-quinone dioxime succinate, p-quinone dioxime adipate, p-quinone dioxime difuroate, p-quinone dioxime dibenzoate, p-quinone dioxime di(o-chlorobenzoate), p-quinone dioxime di-(p-chloro benzoate), p-quinone dioxime di-(p-nitro benzoate), p-quinone dioxime di-(m-nitro benzoate), p-quinonone dioxime di(3,5 dinitro benzoate), p-quinone dioxime di(p-methoxy benzoate), p-quinone dioxime di(n-amyl oxy benzoate), p-quinone dioxime di(m-bromo benzoate), p-quinone dioxime di-(phenyl acetate), p-quinone dioxime di-cinnamate, p-quinone dioxime di-(N-phenyl carbamate), bis ethoxy methyl ether of quinone dioxime, mono-zinc salt of quinone dioxime, di-zinc salt of quinone dioxime, zinc chloride double salt of quinone dioxime, mono mercury salt of quinone dioxime, dimercuric salt of quinone dioxime, mercuric chloride double salt of quinone dioxime, mono-barium chloride double salt of quinone dioxime, mono-cupric salt of quinone dioxime, mono-lead salt of quinone dioxime, mono-barium salt of quinone dioxime, mono-magnesium salt of quinone dioxime, monocalcium salt of quinone dioxime, silver salt of p-quinone dioxime, 1,4-naphthoquinone dioxime, chloro methyl quinone dioxime, 2,6-dimethyl 1,4-quinone dioxime, 2-phenyl-1,4-quinone dioxime, thymo quinone dioxime, 2-chloro-p-quinone dioxime, thymo quinone dioxime dibenzoate, thymo quinone dioxime diacetate, p-quinone dioxime phosphochloride, and the like. A preferred quinoid compound is benzoquinone dioxime.

Prior to adding the curing agent to the rubber masterbatch, the curing agent is dispersed in a low molecular weight polymer, for example, those having a Mₙ of about 500 to about 5,000 and which are often liquids at room temperature (i.e., about 20° to about 25°C).

Many types of low molecular weight polymers in liquid form are useful including ethylene-propylene copolymer (EP), EPDM, PBD, hydrogenated PBD, butyl rubber, polypropylene (e.g. atactic), acrylonitrile-butadiene copolymer (ANB), styrene-butadiene copolymer (SBR), synthetic polyterpenes, thermoplastic olefins, pentaerythritol esters of hydrogenated rosins, triethylene glycol esters of hydrogenated rosins, vinyl toluene copolymers, alkyl aromatics, coumarone-indenes, depolymerized natural rubber (DPR) and polybutenes. Because of their relative availability and properties, polybutenes are particularly useful.

Such polybutenes preferably have a Mₙ exceeding about 1000 to minimize the possibility of migration into adjacent tire components. They can be prepared by polymerizing an isobutylene-rich stream with a metal halide catalyst and preferably have a polymer backbone structure resembling polyisobutylene. Suitable materials include certain Indopol™ polybutenes (Amoco Chemical Co.; Chicago, Illinois), e.g., Indopol™ H-300 and Indopol™ H-1900. These materials are said to have a polymer backbone structure resembling isobutylene, and the H-300 and H-1900 grades are said to have viscosities ranging from about 627 - 675 to about 4069 - 4382 centistokes, respectively, at 99°C (ASTM D-445). The Mₙ of the same materials is respectively from about 1290 to about 2300, as determined by vapor pressure osmometry. In addition to these commercially available polymers, an aliphatic type - such as Piccotac™ B-BHT resin (Hercules Inc.; Wilmington, Delaware) - can be utilized, alone or in combination.

Where a curing agent concentrate is used, the concentrate mixture includes up about 99%, more preferably about 50 to about 95%, most preferably about 70 to about 90% low molecular weight polymer and about 99 to about 1%, more preferably about 50 to about 5%, and most preferably about 30 to about 10% curing agent. In this regard, the resultant curing agent concentrate is substantially free of organic solvent, i.e., it includes less than about 10%, preferably less than about 1%, and more preferably less than about 0.1% of an organic solvent.

Furthermore, the overall A component preferably includes less than about 5% (by wt.) total solvent (i.e., polar and non-polar solvents), and more preferably less than about 1% (by wt.) based on the total weight of the dry component. More specifically, the A component includes less than 10 ppm THF and hexane; preferably, less than 1 ppm of either THF or hexane is present. In fact, head-space/gas chromatographic analysis showed the dry component can have less than 0.0001% (by wt.) (< 1 ppm) THF and hexane as opposed to the 1790 ppm THF and 8390 ppm hexane present in desolventized dry components obtained from a solvent-based process.

### Preparation of a sealant composition

A mixed rubber masterbatch initially is prepared. The masterbatch generally contains high molecular weight elastomer(s) such as EPDM, a portion of the various low molecular weight tackifiers, and, usually, a reinforcing agent such as carbon black or other suitable material as set forth below. The masterbatch is desirably mixed in a high shear mixer or extruder.

A quinoid curing agent concentrate is formed by mixing a curing agent into a low molecular weight polymer using, for example, a three roll mill. This quinoid curing agent(s) concentrate, which is dispersed in the low molecular weight polymer, is then added to the mixer usually with slight heat, under agitation so as to disperse and precipitate the quinoid as very fine particles in the rubber. This mixture of materials generally is referred to as a rubber mixture or blend.

Addition of the quinoid mixture to the rubber masterbatch is carried out in a manner such that a very fine dispersion of the quinoid rubber mixture during mixing. The precipitated quinoid curing agent preferably has a number average particle size of less than 15 µm, desirably less than 10 µm and preferably less than 5 µm. The quinoid preferably is thoroughly mixed with the rubber so that a uniform, preferably homogeneous, distribution is obtained. Generally, mixing occurs at a temperature of from about 20° to about 135° or 150°C, preferably from about 25° to about 100° or 135°C.

Advantageously, the rubber blend need not be desolventized. This significantly increases production speed and reduces production costs and environmental considerations. The resultant mixture is the dry sealant (or A component) identified above. The dry sealant component can be stored in any suitable manner.

Additionally, other ingredients that can be included in the rubber blend include various reinforcing agents such as the aforementioned carbon black. Other suitable reinforcing agents include zinc oxide, aluminum hydrate, lithopone, whiting, clays, hydrated silicas, calcium silicates, silicoaluminates, magnesium oxide, and magnesium carbonate. The amount of such reinforcing agents generally is from about 0.1 to about 50 phr, and desirably from about 1 to about 20 phr.

Surfactants also can be added to the rubber blend. Preferably, the surfactant is blended with the quinoid and the low molecular weight polymer mixture before they are added to the rubber masterbatch. The surfactant is thought to stabilize the growth of small quinoid particles. One suitable surfactant is lecithin. The amount of surfactant can range from 0.001 to about 2% (by wt.) based upon the total weight of said dry sealant component. Other surfactants include conventional anionic as well as nonionic surfactants such as various carboxylic acid salts, such as common soap; naphthenates; various sulfuric esters such as alkyl sulfates; sulfated oils; various ether sulfates, such as sodium poly(ethylene-oxide)-sulfate; various sulfonates such as alkyl and alkyl-aryl sulfonates; various phosphates and phosphonates such as alkyl phosphates and alkyl phosphonates; various ethers; various esters and various amides.

The B component to be mixed with the rubber masterbatch is generally a peroxide. A nonexclusive list of organic peroxides includes benzoyl peroxide; t-butylperoxypivalate; 2,4-dichloro-benzoyl peroxide; decanoylperoxide; propionyl peroxide; hydroxyheptyl peroxide; cyclohexanone peroxide; 2,5-dimethylhexyl-2,5-di(peroxy-benzoate); t-butyl perbenzoate; dicumyl peroxide; 2,5-dimethyl-2,5-di(t-butylperoxy)hexyne-3; 2,5-di-methyl 2,5-di(t-butylperoxy)hexane; 3,5-dimethyl-2,5-di(benzoyl-peroxy)hexane; di-t-butyl peroxide; p-menthane hydro-peroxide; cumene hydroperoxide; 2,5-dimethyl-2,5-di(hydroperoxy)hexane; t-butyl hydroperoxide; lauroyl peroxide; t-amyl perbenzoate; or mixtures therof. Preferred organic peroxides are benzoyl peroxide and t-butyl perbenzoate. Mixtures of two or more of the above peroxides can also be used. Other useful peroxide curing agents are known to those skilled in the art. See, for example, *Kirk Othmer Encyclopedia of Chemical Technology*, 4^{th} ed., vol. 18, pp. 298-310.

If the peroxide curing agent is solid at room temperature, it usually has a number average particle size of less than 15 µm, desirably less than 10 µm, and preferably less than 5 µm. Such fine particle peroxides are added to a vessel. A low molecular weight tackifier, as set forth above, is also added and generally serves as a carrier for the various ingredients. The amount of tackifier generally ranges from about 20 to about 50 pbw based upon the total amount of weight of the B component.

Another material that optionally can be added to the B component is a polar solvent accelerator, utilized in an amount of up to about 20 pbw, and desirably about 0.5 to about 15 pbw, per 100 parts by weight of the B component. The peroxide curing compounds preferably are either pre-dispersed in the polar solvent accelerator, when used, prior to incorporation in the B component or sequentially or jointly added thereto. Suitable polar solvent accelerators include water, primary, secondary and tertiary alcohols and polyols such as aliphatic, cycloaliphatic and aromatic alcohols containing from 1 to 12 carbon atoms as for example methanol, ethanol, propanol, butanol, n-octanol, n-heptanol, n-hexanol, iso-octanol, 2,2-dimethyl-hexane-6-ol, t-amyl alcohol, 4-methyl cyclohexanol, benzyl alcohol, butanediol, propylene glycol and ethylene glycol; ketones, such as ethyl methyl ketone and cyclohexanone; aldehydes such as benzaldehyde, acetaldehyde and propionaldehyde; ethers such as tetrahydrofuran, dioxane, dioxalane and diethyl ether; alkyl and aromatic nitriles such as propionitrile and benzonitrile; acids such as phosphoric acid, acetic acid and propionic acid; aqueous bases such as NaOH; and esters such as dimethyl succinate and diethyl succinate. Dipolar, aprotic compounds such as dialkyl formamides, dialkyl acetamides and dialkylsulfoxides such as dimethylsufoxide are also useful. Mixtures of these accelerators can be utilized. The above polar accelerators can also serve to modify viscosity. Various compounds are mixed together with a sufficient amount of tackifier therein so that B component has a viscosity such that it is readily mixed with the A component.

Supporting the peroxide co-curing agent on an inert filler carrier can be desirable to make handling safer and more convenient. Typical solid supports include com starch, wheat starch bases, clay, and inorganic phosphate bases such as calcium phosphate, such materials should be of a very fine particle size. Typical commercially available supported peroxides which may be utilized in the instant invention include LUPERCO™ AA - which contains approximately 33% benzoyl peroxide supported on a wheat starch base - and LUPERCO™ ACP - which is approximately 35% benzoyl peroxide supported on an inorganic phosphate base - supported peroxides (ATOFINA Chemicals, Inc.; Philadelphia, Pennsylvania).

Mixing the A and B components is accomplished in any suitable mixing device with the requirement that once these compounds are mixed together they are soon thereafter applied to the end product. Application time after mixing the A and B components is typically 0.1 to 30 minutes, more desirably 0.1 to 10, and preferably 0.1 to 5 minutes at a temperature from about 25° to about 130°C. Generally, an extruder is utilized such that the sealant composition is mixed and then is directly applied to its product location, preferably the inner portion of a pneumatic tire, within a very short period of time.

The amount of peroxide utilized on a molar basis is generally in excess of the quinoid curing agent. Thus, from 0.5 to about 10.0 moles and preferably from about 1.0 to about 5.0 moles of a peroxide compound is utilized per mole of quinoid curing agent. Thus, from about 0.05 to about 10 pbw, preferably from about 0.1 to about 8 pbw, and most preferably from about 0.3 to about 5 pbw of the peroxide is utilized per 100 pbw of the total sealant composition.

A sealant made according to the process of the present invention has the advantage of generally achieving a required balance of physical and rheological properties, essential for effective sealing performance. Moreover, because the quinoid curing agent and the co-curing agent are uniformly and efficiently dispersed in the substantial absence of solvent, the overall amount thereof utilized can be reduced resulting in lower sealant costs and excellent aging stability. Another advantage is that uniform consistency in reproducibility of the product results in greater process control during application of the sealant composition to its final location, such as to the tire. In addition to tires, the sealant material can be used as, e.g., a caulking compound, roofing adhesive, or contact adhesive.

Application of the sealant material to its final location, such as a tire, can occur in any conventional manner as by brushing, extrusion coating, and the like. Once applied, the sealant can be cured. Curing can take place from ambient temperature, that is from about 15° to about 125° or 150°C with from about 60° to about 100°, 135° or 150°C being preferred.

### EXAMPLES

### Examples 1-3: Preparation of A Component

To a kneader-extruder (Jaygo, Inc.; Union, New Jersey) having volume V₁ and equipped with sigma blades was added w, kg Royalene™ 505 EPDM (Uniroyal Chemical Co., Inc.; Middlebury, Connecticut) and w₂ kg carbon black at temperature T₁. The sigma blade was set to velocity v₁ and the extruder speed to velocity v₂. Mixing was continued for time t₁ during which the temperature was raised to temperature T₂ and w₃ kg Indopol™ H-300 polyisobutylene was added.

After time t₂, another w₄ kg Indopol™ H-300 polyisobutylene was added and mixing continued for time t₃.

An additional w₅ kg Indopol™ H-300 polyisobutylene was added and mixing continued for time t₄.

Thereafter, at temperature T₃, w₆ kg Piccotac™ B-BHT resin was added followed by w₇, w₈, and w₉ kg Indopol™ H-1900 polyisobutylene after times t₅, t₆, and t₇, respectively. A 0.174 kg charge of 16.7% (by wt.) benozquinone dioxime in Indopol™ H-300 polyisobutylene was added - in Examples 1 and 2, addition occurred 10 minutes after the final charge of polyisobutylene at temperature T₄; in Example 3, addition occurred simultaneous with the final charge of polyisobutylene.

The final blend was allowed to mix for time t₈, and the product was extruded from the mixer.

The values of the various variables mentioned in the foregoing paragraphs are shown below in Table 1.

**Table 1**

| | Example 1 | Example 2 | Example 3 |
|---|---|---|---|
| Volume, V₁ (L) | 5 | 5 | 76 |
| Weight (kg) | | | |
| w₁ | 0.90 | 0.90 | 10.92 |
| w₂ | 0.30 | 0.30 | 3.64 |
| w₃ | 0.34 | 0.36 | 4.66 |
| w₄ | 0.36 | 0.40 | 4.61 |
| w₅ | 0.46 | 0.40 | 6.58 |
| w₆ | 0.32 | 0.32 | 3.85 |
| w₇ | 1.05 | 0.90 | 10.78 |
| w₈ | 0.75 | 1.02 | 11.96 |
| w₉ | 1.12 | 1.00 | 12.68 |
| Temperature (°C) | | | |
| T₁ | 76 | 85 | 143 |
| T₂ | 84 | 106 | 143 |
| T₃ | 117 | 124 | 143 |
| T₄ | 110 | 116 | n/a |
| Velocity (rpm) | | | |
| v₁ | 35.0 | 35.0 | 25.0 |
| v₂ | 40.0 | 40.0 | 30.0 |
| Time (min) | | | |
| t₁ | 20 | 20 | 25 |
| t₂ | 15 | 25 | 30 |
| t₃ | 45 | 20 | 55 |
| t₄ | 40 | 20 | 10 |
| t₅ | 3 | 7 | 5 |
| t₆ | 15 | 25 | 25 |
| t₇ | 35 | 35 | 37 |
| t₈ | 15 | 15 | 10 |

### Example 4: Preparation of A Component Using THF as Solvent (Comparative)

To a 5L kneader-extruder (Jaygo Inc.) equipped with sigma blades was added 0.546 kg Royalene™ 505 EPDM at 80°C. Mixing was continued for 25 minutes, during which the temperature increased to 130°C and the EPDM became a single mass, prior to 0.18 kg carbon black being introduced.

After 30 minutes of mixing, at which time a powder remained in the mixer, 0.79 kg low molecular weight Indopol™ H-300 polyisobutylene was added. Mixing was continued for 45 minutes before 0.29 kg Piccotac™ B-BHT resing was introduced. After 10 more minutes, 1.77 kg Indopol™ H-1900 was added, followed by 0.0175 kg lecithin. The temperature was set to 50°C.

Approximately 25 minutes later, a solution of 0.0175 kg benzoquinone dioxime dissolved in 0.360 kg THF was filtered and added to the mixer under an N₂ purge venting into a dry ice trap. THF was removed over 60 minutes.

The mixer was heated to 110°C for 30 minutes, and the batch extruded through a 0.635 cm die.

### Example 5: Preparation of A Component Using THF and Hexane (Comparative)

In a Banbury mixer at approximately 150°C, 15 pbw EPSYN™ 55 EPDM (DSM Copolymer, Inc.; Baton Rouge, Louisiana) was compounded with 5 pbw carbon black, 50.5 pbw Indopol™ H-1900 polyisobutylene, and 26.4 parts Indopol™ H-300 polyisobutylene to form a masterbatch. The masterbatch was dissolved at about 90° to about 100°C in hexane to form a cement, which was mixed in a stainless steel mixing vessel between 80 to 150 rpm to form a homogenous mixture. The mixture was cooled, and most of 5.5 pbw Piccotac™ B-BHT resin was added and dissolved at room temperature.

Separately from the cement, 1.0 parts of a 5% solution of benzoquinone dioxime (Lord Corp.; Cary, North Carolina) in THF was prepared at approximately 25°C.

The solubilized benzoquinone dioxime was added to the cement under agitation and mixed for 4-6 hours. After the benzoquinone dioxime was uniformly mixed throughout the cement, the various solvents were removed by heating to between approximately 70° and 100°C and pulling a vacuum until most of the hexane and volatile solvents were removed.

### Examples 6-10: Vulcanization of Tire Sealant (Examples 9-10, comparative)

To a Plasti-Corder™ torque rheometer (Brabender OHG; Duisberg, Germany) operating at 60 rpm and 65°C was added 40.5 g of the Component A from Example 1-5, respectively. After 3 minutes, the torque was measured and 4.5 g of a B component were added. (The B component was prepared by mixing 6.5 pbw LUPERCO™ AA benzoyl peroxide and 1.4 pbw t-butyl perbenzoate peroxide with n-octanol and a small portion of the low Piccotac™ B-BHT and thoroughly mixing at about 25°C.)

Tables 2-4 show processing, characteristics and the resulting properties of Examples 6-8 in comparison to comparatives 9-10.

**Table 2:**

| Torque Response During Sealant Vulcanization¹ | | | | |
|---|---|---|---|---|
| | Minimum | Maximum | Rise² | Time to Cure (min) |
| 6 | 426 | 521 | 95 | 4.66 |
| 7 | 449 | 540 | 91 | 7.93 |
| 8 | 451 | 526 | 75 | 4.22 |
| 9 | 410 | 480 | 70 | 1.80 |
| 10 | 380 | 480 | 100 | 1.80 |

| | | | | |
|---|---|---|---|---|
| ¹Torque in m·g | | | | |
| ² Difference between maximum and minimum torque values | | | | |

**Table 3:**

| Solvent Swelling Behavior | | | |
|---|---|---|---|
| | Solvent(s) Used | Swell Ratio | Clarity |
| 6 | None | 22.3 | Cloudy |
| 7 | None | 28.8 | Cloudy |
| 8 | None | 18.2 | Clear |
| 9 | THF | 22.8 | Clear |
| 10 | THF and hexane | 27.4 | Clear |

**Table 4:**

| Benzoquinone Dioxime Particle Size | | | | |
|---|---|---|---|---|
| | Avg. size (µm) | Max. size (µm) | Std. Deviation | Approx. time for Sealant Production (hr) |
| 6 | 1.9 | 6.9 | 1.30 | 2.5 |
| 7 | 1.8 | 8.7 | 1.40 | 2.5 |
| 8 | 1.5 | 5.5 | 0.64 | 2.5 |
| 9 | 1.3 | 5.5 | 1.00 | 6-8 |
| 10 | 7.7 | 44.8 | 6.00 | 24 |

Contrasting Examples 6-8 with 9-10 (comparative) shows that the process of the present invention achieves a suitable p-benzoquinone dioxime particle size in 2.5 hours rather than an 8 or 24 hour process. In addition, the cured material had a similar torque response on vulcanization and swell ratio indicating that the cure efficiency of the generally solvent free blending process of the present invention compared favorably with the conventional solvent blending process. Furthermore, the cure rate was slowed from 2.5 to 4-6 minutes since no trace amounts of THF were present in the material, a positive result to allow additional time for application of the sealant.

While the foregoing describes certain exemplary embodiments of the invention, modifications will be readily apparent to those skilled in the art. Thus, the scope of the invention is intended to be defined by the following claims.

## Claims

1. A process for preparing a sealant composition, said process comprising:
a) providing one or more elastomers, optionally in the substantial absence of organic solvents;
b) dispersing a quinoid curing agent in a polymer having a number average molecular weight below 5,000 to form a curing agent concentrate, said concentrate optionally being substantially free of organic solvent;
c) combining said curing agent concentrate with said one or more elastomers to form said sealant composition; and
d) optionally, adding a co-ourative peroxide to said sealant composition.

2. A process for providing a tire with a sealant composition, said process comprising:
a) mixing one or more elastomers and at least one tackifier to form a rubber masterbatch;
b) dispersing a quinold curing agent in a polymer having a number average molecular weight below 5,000 to form a curing agent concentrate;
c) combining said curing agent concentrate with said rubber masterbatch and continuing to mix to form said sealant; and
d) applying said sealant to a tire.

3. A process for preparing a sealant composition comprising:
a) mixing one or more elastomers In the substantial absence of an organic solvent;
b) adding a quinold curing agent to said elastomer in the substantial absence of an organic solvent; and
c) continuing to mix said curing agent and with said elastomer to form said sealant composition, said sealant composition including less than 1 weight percent organic solvent.

4. The process of any of claims 1 to 3 wherein said one or more elastomers comprises at least one polymer having a number average molecular weight above 50,000 and at least one polymer having a number average molecular weight below 5,000.

5. The process of claim 4 wherein said one or more elastomers comprises 10 to 45 weight percent of said at least one polymer having a number average molecular weight above 50,000 and 55 to 90 weight percent of said polymer having a number average molecular weight below 5,000.

6. The process of any of claims 1 to 5 wherein at least one of the following is true:
said one or more elastomers comprises at least one of ethylene-propylene-diene terpolymer, polybutadiene, butyl rubber, halobutyl rubber, acrylonitrile-butadiene copolymer, styrene-butadiene copolymer, natural rubber, and cis polyisoprene; and
said dispersing polymer comprises at least one of ethylene-propylene copolymer, ethylene-propylene-diene terpolymer, polybutadiene, hydrogenated polybutadiene, butyl rubber, polypropylene, acrylonitrile-butadiene copolymer, styrene-butadiene copolymer, synthetic polyterpenes, thermoplastic olefins, pentaerythritol esters of hydrogenated resins, triethylene glycol esters of hydrogenated rosins, vinyl toluene copolymers, alkyl aromatics, coumarone-indenes, depolymerized natural rubber, and polybutenes.

7. The process of any of claims 1 to 2 and 4 to 6 wherein said sealant composition includes less than 5 weight percent organic solvent.

8. A rubber masterbatch or sealant composition comprising:
a) an elastomer comprising at least one of ethylene-propylene-diene terpolymer, polybutadiene, butyl rubber, halo butyl rubber, acrylonitrile-butadiene copolymer, styrene-butadiene copolymer, natural rubber, and cis polyisoprene;
b) at least one low molecular weight polymer selected from ethylene-propylene copolymer, ethylene-propylene-diene-terpolymer, polybutadiene, hydrogenated polybutadiene, butyl rubber, polypropylene, acrylonitrile/butadiene copolymer, styrene/butadiene copolymer, synthetic polyterpenes, thermoplastic olefins, pentaerythritol esters of hydrogenated rosins, triethylene glycol esters of hydrogenated rosins, vinyl toluene copolymers, alkyl aromatics, coumarone-indenes, depolymerized natural rubber, polybutenes and mixtures thereof, and
c) a quinoid curing agent,
said composition including less than 1 weight percent organic solvent.

9. The composition of claim 8 comprising from 0.2 to 2.0 phr of said curing agent.

10. The composition of any of claims 8 and 9 further comprising a co-curative peroxide.

## Patentansprüche

1. Verfahren zur Herstellung einer Dichtungsmaterialzusammensetzung, wobei das Verfahren Folgendes umfasst:
a) Bereitstellen eines oder mehrerer Elastomerer gegebenenfalls im Wesentlichen frei von organischen Lösungsmitteln;
b) Dispergieren eines chinoiden Härtungsmittels in einem Polymer mit einem zahlenmittleren Molekulargewicht von weniger als 5000 um ein Härtungsmittelkonzentrat zu bilden, wobei das Konzentrat gegebenenfalls im Wesentlichen frei von organischem Lösungsmittel ist;
c) Kombinieren des Härtungsmittelkonzentrats mit dem einem oder den mehreren Elastomeren um eine Dichtungsmaterialzusammensetzung zu bilden; und
d) gegebenenfalls Zugeben eines Peroxids als weiteres Härtungsmittel zu der Dichtungsmaterialzusammensetzung.

2. Verfahren zum Bereitstellen eines Reifens mit einer Dichtungsmaterialzusammensetzung, wobei das Verfahren Folgendes umfasst:
a) Vermischen eines oder mehrerer Elastomerer und mindestens eines Klebrigmachers um ein Kautschuk-Masterbatch zu bilden;
b) Dispergieren eines chinoiden Härtungsmittels in einem Polymer mit einem zahlenmittleren Molekulargewicht von weniger als 5000 um ein Härtungsmittelkonzentrat zu bilden;
c) Kombinieren des Härtungsmittelkonzentrats mit dem Kautschuk-Masterbatch und Fortsetzen des Vermischens um das Dichtungsmaterial zu bilden; und
d) Anwenden des Dichtungsmaterials auf den Reifen.

3. Verfahren zur Herstellung einer Dichtungsmaterialzusammensetzung, umfassend:
a) Vermischen eines oder mehrerer Elastomerer im Wesentlichen in Abwesenheit eines organischen Lösungsmittels;
b) Zugeben eines chinoiden Härtungsmittels zu dem Elastomer, im Wesentlichen in Abwesenheit eines organischen Lösungsmittels; und
c) Fortsetzen des Vermischens des Härtungsmittels mit dem Elastomer um die Dichtungsmaterialzusammensetzung zu bilden, wobei die Dichtungsmaterialzusammensetzung weniger als 1 Gew.-% organisches Lösungsmittel enthält.

4. Verfahren nach einem der Ansprüche 1 bis 3, wobei das eine oder die mehreren Elastomere mindestens ein Polymer mit einem zahlenmittleren Molekulargewicht von mehr als 50.000 und mindestens ein Polymer mit einem zahlenmittleren Molekulargewicht von weniger als 5000 umfasst bzw. umfassen.

5. Verfahren nach Anspruch 4, wobei das mindestens eine oder die mehreren Elastomere 10 bis 45 Gew.-% des mindestens einen Polymers mit einem zahlenmittleren Molekulargewicht von mehr als 50.000 und 55 bis 90 Gew.-% des Polymers mit einem zahlenmittleren Molekulargewicht von weniger als 5000 umfasst bzw. umfassen.

6. Verfahren nach einem der Ansprüche 1 bis 5, bei dem mindestens eine der folgenden Aussagen zutrifft:
das eine oder die mehreren Elastomere umfasst bzw. umfassen mindestens eines von Ethylen-Propylen-Dien-Terpolymer, Polybutadien, Butylkautschuk, Halogenbutylkautschuk, Acrylonitril-Butadien-Copolymer, Styrol-Butadien-Copolymer, Naturkautschuk und cis-Polyisopren; und
das dispergierende Polymer umfasst mindestens eines von Ethylen-Propylen-Copolymer, Ethylen-Propylen-Dien-Terpolymer, Polybutadien, hydriertes Polybutadien, Butylkautschuk, Polypropylen, Acrylonitril-Butadien-Copolymer, Styrol-Butadien-Copolymer, synthetische Polyterpene, thermoplastische Olefine, Pentaerythritester hydrierter Terpentinharze, Triethylenglykolester hydrierter Terpentinharze, Vinyltoluol-Copolymer, alkylaromatische Verbindungen, Cumaron-Indene, depolymerisierter Naturkautschuk und Polybutene.

7. Verfahren nach einem der Ansprüche 1 bis 2 und 4 bis 6, wobei die Dichtungsmaterialzusammensetzung weniger als 5 Gew.-% organisches Lösungsmittel enthält.

8. Kautschuk-Masterbatch oder Dichtungsmaterialzusammensetzung, umfassend:
a) ein Elastomer, umfassend mindestens eines von Ethylen-Propylen-Dien-Terpolymer, Polybutadien, Butylkautschuk, Halogenbutylkautschuk, Acrylonitril-Butadien-Copolymer, Styrol-Butadien-Copolymer, Naturkautschuk und cis-Polyisopren;
b) mindestens ein Polymer mit niedrigem Molekulargewicht ausgewählt aus Ethylen-Propylen-Copolymer, Ethylen-Propylen-Dien-Terpolymer, Polybutadien, hydriertem Polybutadien, Butylkautschuk, Polypropylen, Acrylonitril/Butadien-Copolymer, Styrol/Butadien-Copolymer, synthetischen Polyterpenen, thermoplastischen Olefinen, Pentaerythritestern hydrierter Terpentinharze, Triethylenglykolester hydrierter Terpentinharze, Vinyltoluol-Copolymere, alkylaromatischen Verbindungen, Cumaron-Indenen, depolymerisiertem Naturkautschuk, Polybutenen und Gemischen davon; und
c) ein chinoides Härtungsmittel,
wobei die zusammensetzung weniger als 1 Gew.-% organisches Lösungsmittel enthält.

9. Zusammensetzung nach Anspruch 8, umfassend 0,2 bis 2,0 phr des Härtungsmittels.

10. Zusammensetzung nach einem der Ansprüche 8 und 9, die des Weiteren ein Peroxid als weiteres Härtungsmittel umfasst.

## Revendications

1. Procédé de préparation d'une composition d'agent d'étanchéité, ledit procédé comprenant les étapes consistant à :
a) fournir un ou plusieurs élastomères, le cas échéant sensiblement en l'absence de solvants organiques ;
b) disperser un agent de durcissement de type quinoïde dans un polymère ayant une masse moléculaire moyenne en nombre inférieure à 5000 pour former un concentré d'agent de durcissement, ledit concentré étant éventuellement sensiblement exempt de solvant organique ;
c) combiner ledit concentré d'agent de durcissement avec ledit ou lesdits élastomère(s) pour former ladite composition d'agent d'étanchéité ; et
d) le cas échéant, ajouter un peroxyde de co-durcissement à ladite composition d'agent d'étanchéité.

2. Procédé pour fournir un pneu avec une composition d'agent d'étanchéité, ledit procédé comprenant les étapes consistant à :
a) mélanger un ou plusieurs élastomères et au moins un agent collant pour former un lot mère de caoutchouc ;
b) disperser un agent de durcissement de type quinoïde dans un polymère ayant une masse moléculaire moyenne en nombre inférieure à 5000 pour former un concentré d'agent de durcissement ;
c) combiner ledit concentré d'agent de durcissement avec ledit lot mère de caoutchouc et continuer de mélanger pour former ledit agent d'étanchéité ; et
d) appliquer ledit agent d'étanchéité sur un pneu.

3. Procédé de préparation d'une composition d'agent d'étanchéité, comprenant les étapes consistant à :
a) mélanger un ou plusieurs élastomères sensiblement en l'absence d'un solvant organique ;
b) ajouter un agent de durcissement de type quinoïde audit élastomère sensiblement en l'absence d'un solvant organique ; et
c) continuer de mélanger ledit agent de durcissement et ledit élastomère pour former ladite composition d'agent d'étanchéité, ladite composition d'agent d'étanchéité comprenant moins de 1 % en poids de solvant organique.

4. Procédé selon l'une quelconque des revendications 1 à 3, dans lequel ledit ou lesdits élastomère(s) comprend/comprennent au moins un polymère ayant une masse moléculaire moyenne en nombre supérieure à 50 000 et au moins un polymère ayant une masse moléculaire moyenne en nombre inférieure à 5000.

5. Procédé selon la revendication 4, dans lequel ledit ou lesdits élastomère(s) comprend/comprennent de 10 à 45 % en poids dudit polymère, au nombre d'au moins un, ayant une masse moléculaire moyenne en nombre supérieure à 50 000 et de 55 à 90 % en poids dudit polymère ayant une masse moléculaire moyenne en nombre inférieure à 5000.

6. Procédé selon l'une quelconque des revendications 1 à 5, dans lequel au moins l'une des affirmations suivantes est vraie :
ledit ou lesdits élastomère(s) comprend/comprennent au moins l'un de : terpolymère d'éthylène-propylène-diène, polybutadiène, butylcaoutchouc, butylcaoutchouc halogéné, copolymère d'acrylonitrile-butadiène, copolymère de styrène-butadiène, caoutchouc naturel et cis-polyisoprène ; et
ledit polymère dispersant comprend au moins l'un de : copolymère d'éthylène-propylène, terpolymère d'éthylène-propylène-diène, polybutadiène, polybutadiène hydrogéné, butylcaoutchouc, polypropylène, copolymère d'acrylonitrile-butadiène, copolymère de styrène-butadiène, polyterpènes synthétiques, oléfines thermoplastiques, esters de penta-érythritol et de colophane hydrogénée, esters de triéthylèneglycol et de colophane hydrogénée, copolymères de vinyle-toluène, composés aromatiques d'alkyle, coumarone-indènes, caoutchouc naturel dépolymérisé et polybutènes.

7. Procédé selon l'une quelconque des revendications 1 à 2 et 4 à 6, dans lequel ladite composition d'agent d'étanchéité comprend moins de 5 % en poids de solvant organique.

8. Lot mère de caoutchouc ou composition d'agent d'étanchéité comprenant :
a) un élastomère comprenant au moins l'un de : terpolymère d'éthylène-propylène-diène, polybutadiène, butylcaoutchouc, butylcaoutchouc halogéné, copolymère d'acrylo-nitrile-butadiène, copolymère de styrène-butadiène, caoutchouc naturel et cis-polyisoprène ;
b) au moins un polymère de poids moléculaire bas choisi parmi : copolymère d'éthylène-propylène, terpolymère d'éthylène-propylène-diène, polybutadiène, polybutadiène hydrogéné, butylcaoutchouc, polypropylène, copolymère d'acrylonitrile/butadiène, copolymère de styrène/butadiène, polyterpènes synthétiques, oléfines thermoplastiques, esters de penta-érythritol et de colophane hydrogénée, esters de triéthylèneglycol et de colophane hydrogénée, copolymères de vinyle-toluène, composés aromatiques d'alkyle, coumarone-indènes, caoutchouc naturel dépolymérisé, polybutènes et des mélanges de ceux-ci ; et
c) un agent de durcissement de type quinoïde,
ladite composition comprenant moins de 1 % en poids de solvant organique.

9. Composition selon la revendication 8, comprenant de 0,2 à 2,0 parties en poids dudit agent de durcissement pour 100 parties.

10. Composition selon l'une quelconque des revendications 8 et 9, comprenant, en outre, un peroxyde de co-durcissement.
